# EUROPEAN PATENT APPLICATION

(11) **EP 4 801 011 A1**
(43) Date of publication of application: **02.09.2026**
(21) Application number: 26155619.5
(22) Date of filing: 02.02.2026
(51) Int. Cl.: H04L 67/12, H04W 4/38, H04W 4/70

(54) **ISAC FOR ENTERPRISE DT AND NDT INTERWORKING**

(30) Priority: 27.02.2025 FI 20255169
(71) Applicant: Nokia Solutions and Networks Oy, 02610 Espoo (FI)
(72) Inventor: SZILÁGYI, Péter, Budapest (HU); VULKÁN, Csaba, Budapest (HU)
(74) Representative: Bryers Intellectual Property Ltd

(57) **Abstract**

Described herein is a first network node, of a network having a plurality of network nodes, wherein the first network node includes one or more sensing capabilities of an event type and/or a coverage area that the first network node is able to detect; wherein the first network node is a network digital twin, NDT, and wherein the first network node comprises at least one processor; and at least one memory storing instructions that, when executed by the at least one processor, cause the first network node at least to: receive, from a second network node, a sensing intent, which is used to indicate to the first network node to detect an event within the coverage area and within a time window, wherein the event corresponds to the event type of which the first network node includes one or more sensing capabilities; perform, detection of an occurrence of an event indicated in the sensing intent, based on the sensing capabilities of the first network node; and send, to the second network node, a sensing report based on the detection.

## Description

### TECHNOLOGY

The present disclosure relates to a system of industrial Digital Twins, DT, that are connected by communication services provided by a mobile network (e.g., a private industrial network). The network also has one or more Network Digital Twins, NDT, to provide advanced network automation capabilities. As both the NDT(s) and the DT(s) are software entities part of the same system, in particular to exploiting sensing capabilities (network as a sensor, integrated sensing and communication, ISAC) and exposing this capability for a DT to improve its environmental awareness. At the same time, the DT has to guide the sensing capability of the network, through a reverse channel via the NDT.

### BACKGROUND

Any discussion of the background art throughout the specification should in no way be considered as an admission that such art is widely known or forms part of common general knowledge in the field.

Industrial automation uses DT to capture a digital model of physical entities such as sensors and actuators, as well as logical entities such as industrial processes (e.g., the manufacturing of a product, logistics of materials, continuous quality control during the manufacturing process, etc.). DTs needs to maintain synchronicity with their physical (or logical) twin by collecting and applying changes in the original physical space in the digital representation in real time. This requires that (1) the physical environment is equipped with the right sensors and data sources that capture the information relevant for the DTs; (2) there is a reliable, real-time, deterministic data flow from the data sources to the DTs.

Certain industrial use cases such as smart parking, autonomous cargo terminal management, construction, etc. require observation capabilities in the physical space that allows the DTs to monitor the presence and motion of relevant objects and people. In physical environments where the set of objects or people and their trajectories are not pre-defined and controlled, it is expensive and hard to deploy dedicated sensors in every potential area where a relevant motion or presence event may happen.

Hence, there is a need to resolve the drwabacks of the known technique. In particular an object is to develope new mechanisms to satifiy the demand of collecting reliable and/or real-time data with a low cost in an industrial system.

### SUMMARY

In accordance with a first aspect of the present disclosure, there is provided a first network node, of a network having a plurality of network nodes, wherein the first network node includes one or more sensing capabilities of an event type and/or a coverage area that the first network node is able to detect; wherein the first network node may be a network digital twin, NDT, and wherein the first network node may comprise:
at least one processor; and
at least one memory storing instructions that, when executed by the at least one processor, cause the first network node at least to:
   receive, from a second network node, a sensing intent, which is used to indicate to the first network node to detect an event within the coverage area and within a time window, wherein the event corresponds to the event type of which the first network node includes one or more sensing capabilities;
   perform, detection of an occurrence of an event indicated in the sensing intent, based on the sensing capabilities of the first network node;

In some examples, before receiving, from a second network node, a sensing intent, which is used to indicate to the first network node to detect an event within the coverage area and within a time window, the first network node may be caused to:
provide, to the second network node, the sensing capabilities of an event type and/or a coverage area that the first network node is able to detect.

In some examples, providing, to the second network node, the sensing capabilities of an event type and/or a coverage area that the first network node is able to detect, may further comprise: provide, to the second network node, at least one sensing capabilities of an event type and/or a coverage area that the first network node is able to detect based on a set of models of sensing capabilities available to the first network node, wherein the set of models of sensing capabilities include at least one model of sensing capabilities, and each of the at least one model of sensing capabilities comprises one or more supported event types from the event type of which the first network node includes one or more sensing capabilities.

In some examples, performing, detection of an occurrence of an event indicated in the sensing intent, based on the sensing capabilities of the first network node, may further comprise:
determine, based on the sensing intent, at least one model of sensing capabilities from the set of models of sensing capabilities available to the first network node;
load, the determined at least one model of sensing capabilities from the set of models of sensing capabilities available to the first network node;
receive, sensing data, from a third network node;
obtain, at least one first event from the sensing data based on the determined at least one model;
compare, the obtained at least one first event from the sensing data with the event indicated in the sensing intent;
determine, if the obtained at least one first event from the sensing data matches with the event indicated in the sensing intent.

In some examples, sending, to the second network node, a sensing report based on the sensing intent, may further comprise: send, to the second network node, a positive report if the event indicated in the sensing intent is detected; or send, to the second network node, a negative report if the event indicated in the sensing intent is not detected.

In some examples, sending, to the second network node, a positive report if the event indicated in the sensing intent is detected, may further comprise:
send, to the second network node, the positive report if the obtained at least one first event from the sensing data matches with the event indicated in the sensing intent; and
wherein sending, to the second network node, a negative report if the event indicated in the sensing intent is not detected, further comprises:
   send, to the second network node, the negative report if the event indicated in the sensing intent is not detected until the end of the time boundary.

In some examples, the at least one event type may comprise at least one of the followings: presence of an object, a motion of an object, and a type of the object.

In some examples, the sensing intent further indicates a number of times that the even indicated in the sensing intent to be detected.

In some examples, the positive report may indicate that an event conforming to the event indicated in the sensing intent is detected; and/or the negative report may indicate that one or more events indicated in the sensing intent does not occur, or occurs less times than a number of times indicated in the sensing intent.

In some examples, the positive report may comprise at least one of the following information elements: the at least one event type, a first time boundary indicating when the occurrences of the event was detected, a location of the detection, a number of detected occurrences of the event, and a confidence indicating the likelihood of the event being a true positive, wherein the first time boundary is within the time boundary, and the location of the detection is within the at least one coverage area.

In some examples, the negative report may comprise at least one of the following information elements: the at least one event type, a first time boundary indicating when the occurrences of the event was detected, a location of the detection, and a number of detected occurrences of the event, wherein the first time boundary is within the time boundary, and the location of the detection is within the at least one coverage area.

In some examples, the third network node may be a radio access network, RAN, and performing, detection of an occurrence of an event indicated in the sensing intent, based on the sensing capabilities of the first network node, may further comprise: the NDT configures integrated sensing and communication, ISAC, in the RAN to operate over the at least one coverage area.

In accordance with a second aspect of the present disclosure, there is provided a second network node, wherein the second network node may comprise: at least one processor; and at least one memory storing instructions that, when executed by the at least one processor, cause the first network node at least to: send, to the first network node, a sensing intent, which is used to indicate the first network node to detect an event within at least one of the at least one coverage area and within a time window, wherein the event corresponds to an event type of which the first network node includes one or more sensing capabilities; and receive, from the first network node, a sensing report based on a detection performed by the first network node according to the sensing intent.

In some examples, before sending, to the first network node, a sensing intent, which is used to indicate the first network node to detect an event within at least one of the at least one coverage area and within a time window, wherein the event corresponds to an event type of which the first network node includes one or more sensing capabilities, the second network node may be further caused to: receive, from a first network node, at least one sensing capabilities of the event type and/or a coverage area that the first network node is able to detect.

In some examples, receiving, from the first network node, a sensing report based on a detection performed by the first network node according to the sensing intent, may further comprise: receive, from the first network node, a positive report if the event indicated in the sensing intent is detected; or receive, from the first network node, a negative report if the event indicated in the sensing intent is not detected.

In some examples, the positive report may indicate that an event conforming to the event indicated in the sensing intent is detected; and/or the negative report may indicate that one or more events indicated in the sensing intent does not occur, or occurs less times than a number of times indicated in the sensing intent

In some examples, the event type may comprise at least one of the followings: presence of an object, a motion of an object, and a type of the object.

In some examples, the sensing intent may further indicate a number of times that the even to be detected.

In some examples, the positive report may comprise at least one of the following information elements : the at least one event type, a first time boundary indicating when the occurrences of the event was detected, a location of the detection, a number of detected occurrences of the event, and a confidence indicating the likelihood of the event being a true positive, wherein the first time boundary is within the time boundary, and the location of the detection is within the at least one coverage area.

In some examples, the negative report may comprise at least one of the following information elements : the at least one event type, a first time boundary indicating when the occurrences of the event was detected, a location of the detection, and a number of detected occurrences of the event, wherein the first time boundary is within the time boundary, and the location of the detection is within the at least one coverage area.

In accordance with a third aspect of the present disclosure, there is provided a network system with a first network node and a second network node, wherein the first network node is configured in accordance with the first aspect of the present disclosure and the second network node is configured in accordance with the second aspect of the present disclosure.

In accordance with a fourth aspect of the present disclosure, there is provided a communication method, wherein the method may comprise:
receiving, from a second network node, a sensing intent, which is used to indicate to the first network node to detect an event within the coverage area and within a time window, wherein the event corresponds to the event type of which the first network node includes one or more sensing capabilities;
performing, detection of an occurrence of an event indicated in the sensing intent, based on the sensing capabilities of the first network node; and
sending, to the second network node, a sensing report based on the detection;
wherein, the first network node is a network digital twin, NDT.

In some examples, before receiving, from a second network node, a sensing intent, which is used to indicate to the first network node to detect an event within the coverage area and within a time window, wherein the event corresponds to the event type of which the first network node includes one or more sensing capabilities, the method may further comprise:
providing, to the second network node, the sensing capabilities of an event type and/or a coverage area that the first network node is able to detect.

In some examples, providing, to the second network node, the sensing capabilities of an event type and/or a coverage area that the first network node is able to detect, may further comprise:
providing, to the second network node, at least one sensing capabilities of an event type and/or a coverage area that the first network node is able to detect based on a set of models of sensing capabilities available to the first network node, wherein the set of models of sensing capabilities include at least one model of sensing capabilities, and each of the at least one model of sensing capabilities comprises one or more supported event types from the event type of which the first network node includes one or more sensing capabilities.

In some examples, performing, detection of an occurrence of an event indicated in the sensing intent, based on the sensing capabilities of the first network node, may further comprise:
determining, based on the sensing intent, at least one model of sensing capabilities from the set of models of sensing capabilities available to the first network node;
loading, the determined at least one model of sensing capabilities from the set of models of sensing capabilities available to the first network node;
receiving, sensing data, from a third network node;
obtaining, at least one first event from the sensing data based on the determined at least one model;
comparing, the obtained at least one first event from the sensing data with the event indicated in the sensing intent; and
determining, if the obtained at least one first event from the sensing data matches with the event indicated in the sensing intent or not.

In some examples, sending, to the second network node, a sensing report based on the sensing intent, may further comprise:
sending, to the second network node, a positive report if the event indicated in the sensing intent is detected; or
sending, to the second network node, a negative report if the event indicated in the sensing intent is not detected.

In some examples, sending, to the second network node, a positive report if the event indicated in the sensing intent is detected, may further comprise:
sending, to the second network node, the positive report if the obtained at least one first event from the sensing data matches with the event indicated in the sensing intent; and
wherein sending, to the second network node, a negative report if the event indicated in the sensing intent is not detected, may further comprise:
   sending, to the second network node, the negative report if the event indicated in the sensing intent is not detected until the end of the time boundary.

In some examples, the at least one event type may comprise at least one of the followings: presence of an object, a motion of an object, and a type of the object.

In some examples, the sensing intent may further indicate a number of times that the even to be detected.

In some examples, the positive report may indicate that an event conforming to the event indicated in the sensing intent is detected; and/or
the negative report may indicate that one or more events indicated in the sensing intent does not occur, or occurs less times than a number of times indicated in the sensing intent.

In some examples, the positive report may comprise at least one of the followings: the at least one event type, a first time boundary indicating when the occurrences of the event was detected, a location of the detection, a number of detected occurrences of the event, and a confidence indicating the likelihood of the event being a true positive, wherein the first time boundary is within the time boundary, and the location of the detection is within the at least one coverage area.

In some examples, the negative report may comprise at least one of the followings: the at least one event type, a first time boundary indicating when the occurrences of the event was detected, a location of the detection, and a number of detected occurrences of the event, wherein the first time boundary is within the time boundary, and the location of the detection is within the at least one coverage area.

In some examples, the third network node may be a radio access network, RAN, and performing, detection of an occurrence of an event indicated in the sensing intent, based on the sensing capabilities of the first network node, may further comprise: the NDT configures integrated sensing and communication, ISAC, in the RAN to operate over the at least one coverage area.

In accordance with a fifth aspect of the present disclosure, there is provided a communication method, wherein the method may comprise:
sending, to the first network node, a sensing intent, which is used to indicate the first network node to detect an event within at least one of the at least one coverage area and within a time window, wherein the event corresponds to an event type of which the first network node includes one or more sensing capabilities; and
receiving, from the first network node, a sensing report based on a detection performed by the first network node according to the sensing intent.

In some examples, before sending, to the first network node, a sensing intent, which is used to indicate the first network node to detect an event within at least one of the at least one coverage area and within a time window, wherein the event corresponds to an event type of which the first network node includes one or more sensing capabilities, the method may further comprise: receiving, from a first network node, at least one sensing capabilities of the event type and/or a coverage area that the first network node is able to detect.

In some examples, the receiving, from the first network node, a sensing report based on a detection performed by the first network node according to the sensing intent, may further comprise:
receiving, from the first network node, a positive report if the event indicated in the sensing intent is detected; or
receiving, from the first network node, a negative report if the event indicated in the sensing intent is not detected.

In some examples, the positive report may indicate that an event conforming to the event indicated in the sensing intent is detected; and/or the negative report may indicate that one or more events indicated in the sensing intent does not occur, or occurs less times than a number of times indicated in the sensing intent.

In some examples, the at least one event type may comprise at least one of the followings: presence of an object, a motion of an object, and a type of the object.

In some examples, the sensing intent may further indicate a number of times that the even to be detected.

In some examples, the positive report may comprise at least one of the following information elements: the at least one event type, a first time boundary indicating when the occurrences of the event was detected, a location of the detection, a number of detected occurrences of the event, and a confidence indicating the likelihood of the event being a true positive, wherein the first time boundary is within the time boundary, and the location of the detection is within the at least one coverage area.

In some examples, the negative report may comprise at least one of the following information elements: the at least one event type, a first time boundary indicating when the occurrences of the event was detected, a location of the detection, and a number of detected occurrences of the event, wherein the first time boundary is within the time boundary, and the location of the detection is within the at least one coverage area.

In accordance with a sixth aspect of the present disclosure, there is provided a computer readable medium storing instructions thereon, the instructions, when executed by at least one processing unit of a machine, causing the machine to perform the method in accordance with the fourth aspect of the present disclosure and/or the fifth aspect of the present disclosure.

In accordance with a seventh aspect of the present disclosure, there is provided a computer program comprising instructions for causing an apparatus to perform the method according to the fourth aspect, or for causing an apparatus to perform the method according to the fourth aspect of the present disclosure and/or the fifth aspect of the present disclosure.

In addition, according to some other example embodiments, there is provided, for example, a computer program product for a wireless communication device comprising at least one processor, including software code portions for performing the respective steps disclosed in the present disclosure, when said product is run on the device. The computer program product may include a computer-readable medium on which said software code portions are stored. Furthermore, the computer program product may be directly loadable into the internal memory of the computer and/or transmittable via a network by means of at least one of upload, download and push procedures.

While some example embodiments will be described herein with particular reference to the above application, it will be appreciated that the present disclosure is not limited to such a field of use, and is applicable in broader contexts.

Notably, it is understood that methods according to the present disclosure relate to methods of operating the apparatuses according to the above example embodiments and variations thereof, and that respective statements made with regard to the apparatuses likewise apply to the corresponding methods, and vice versa, such that similar description may be omitted for the sake of conciseness. In addition, the above aspects may be combined in many ways, even if not explicitly disclosed. The skilled person will understand that these combinations of aspects and features/steps are possible unless it creates a contradiction which is explicitly excluded.

Implementations of the disclosed apparatuses may include using, but not limited to, one or more processor, one or more application specific integrated circuit (ASIC) and/or one or more field programmable gate array (FPGA). Implementations of the apparatus may also include using other conventional and/or customized hardware such as software programmable processors, such as graphics processing unit (GPU) processors.

Other and further example embodiments of the present disclosure will become apparent during the course of the following discussion and by reference to the accompanying drawings.

### BRIEF DESCRIPTION OF THE DRAWINGS

Example embodiments of the disclosure will now be described, by way of example only, with reference to the accompanying drawings in which:
Figure 1 schematically illustrates an example of a general concept of the invention: sensing intent-based interworking between an industrial system and an NDT to support use cases with motion/presence sensing;
Figure 2 schematically illustrates an example deployment of the invention in a private network providing services in a cargo port;
Figure 3 schematically illustrates an example of interworking process according to an example embodiment of the present disclosure;
Figure 4 schematically illustrates an example of interworking process according to an example embodiment of the present disclosure;
Figure 5 schematically illustrates an example of details of classifying sensing data to event types by the NDT using a library of models; and
Figure 6 schematically illustrates an example of information elements of sensing intent (left) and positive/negative sensing reports (right).

### DESCRIPTION OF EXAMPLE EMBODIMENTS

In the following, different exemplifying embodiments will be described using, as an example of a communication network to which examples of embodiments may be applied, a communication network architecture based on 3GPP standards for a communication network, such as a 5G/NR, without restricting the embodiments to such an architecture, however. It is apparent for a person skilled in the art that the embodiments may also be applied to other kinds of communication networks where mobile communication principles are integrated with a D2D (device-to-device) or V2X (vehicle to everything) configuration, such as SL (side link), e.g. Wi-Fi, worldwide interoperability for microwave access (WiMAX), Bluetooth^{®}, personal communications services (PCS), ZigBee^{®}, wideband code division multiple access (WCDMA), systems using ultra-wideband (UWB) technology, mobile ad-hoc networks (MANETs), wired access, etc. Furthermore, without loss of generality, the description of some examples of embodiments is related to a mobile communication network, but principles of the disclosure can be extended and applied to any other type of communication network, such as a wired communication network.

The following examples and embodiments are to be understood only as illustrative examples. Although the specification may refer to "an", "one", or "some" example(s) or embodiment(s) in several locations, this does not necessarily mean that each such reference is related to the same example(s) or embodiment(s), or that the feature only applies to a single example or embodiment. Single features of different embodiments may also be combined to provide other embodiments. Furthermore, terms like "comprising" and "including" should be understood as not limiting the described embodiments to consist of only those features that have been mentioned; such examples and embodiments may also contain features, structures, units, modules, etc., that have not been specifically mentioned.

A basic system architecture of a (tele)communication network including a mobile communication system where some examples of embodiments are applicable may include an architecture of one or more communication networks including wireless access network subsystem(s) and core network(s). Such an architecture may include one or more communication network control elements or functions, access network elements, radio access network elements, access service network gateways or base transceiver stations, such as a base station (BS), an access point (AP), a NodeB (NB), an eNB or a gNB, a distributed unit (DU) or a centralized/central unit (CU), which controls a respective coverage area or cell(s) and with which one or more communication stations such as communication elements or functions, like user devices or terminal devices, like a user equipment (UE), or another device having a similar function, such as a modem chipset, a chip, a module etc., which can also be part of a station, an element, a function or an application capable of conducting a communication, such as a UE, an element or function usable in a machine-to-machine communication architecture, or attached as a separate element to such an element, function or applicati on capable of conducting a communication, or the like, are capable to communicate via one or more channels via one or more communication beams for transmitting several types of data in a plurality of access domains. Furthermore, core network elements or network functions, such as gateway network elements/functions, mobility management entities, a mobile switching center, servers, databases and the like may be included.

The following description may provide further details of alternatives, modifications and variances: a gNB comprises e.g., a node providing NR user plane and control plane protocol terminations towards the UE, and connected via the NG interface to the 5GC, e.g., according to 3GPP TS 38.300 V16.6.0 (2021-06) section 3.2 incorporated by reference.

A gNB Central Unit (gNB-CU) comprises e.g., a logical node hosting e.g., RRC, SDAP and PDCP protocols of the gNB or RRC and PDCP protocols of the en-gNB that controls the operation of one or more gNB-DUs. The gNB-CU terminates the F1 interface connected with the gNB-DU.

A gNB Distributed Unit (gNB-DU) comprises e.g., a logical node hosting e.g., RLC, MAC and PHY layers of the gNB or en-gNB, and its operation is partly controlled by the gNB-CU. One gNB-DU supports one or multiple cells. One cell is supported by only one gNB-DU. The gNB-DU terminates the F1 interface connected with the gNB-CU.

A gNB-CU-Control Plane (gNB-CU-CP) comprises e.g., a logical node hosting e.g., the RRC and the control plane part of the PDCP protocol of the gNB-CU for an en-gNB or a gNB. The gNB-CU-CP terminates the E1 interface connected with the gNB-CU-UP and the F1-C interface connected with the gNB-DU.

A gNB-CU-User Plane (gNB-CU-UP) comprises e.g., a logical node hosting e.g., the user plane part of the PDCP protocol of the gNB-CU for an en-gNB, and the user plane part of the PDCP protocol and the SDAP protocol of the gNB-CU for a gNB. The gNB-CU-UP terminates the E1 interface connected with the gNB-CU-CP and the F1-U interface connected with the gNB-DU, e.g., according to 3GPP TS 38.401 V16.6.0 (2021-07) section 3.1 incorporated by reference.

Different functional splits between the central and distributed unit are possible, e.g., called options:
Option 1 (1A-like split):
   - The function split in this option is similar to the 1A architecture in DC. RRC is in the central unit. PDCP, RLC, MAC, physical layer and RF are in the distributed unit.
Option 2 (3C-like split):
   - The function split in this option is similar to the 3C architecture in DC. RRC and PDCP are in the central unit. RLC, MAC, physical layer and RF are in the distributed unit.
Option 3 (intra RLC split):
   - Low RLC (partial function of RLC), MAC, physical layer and RF are in the distributed unit. PDCP and high RLC (the other partial function of RLC) are in the central unit.
Option 4 (RLC-MAC split):
   - MAC, physical layer and RF are in the distributed unit. PDCP and RLC are in the central unit.
Or else, e.g., according to 3GPP TR 38.801 V14.0.0 (2017-03) section 11 incorporated by reference.

A gNB supports different protocol layers, e.g., Layer 1 (L1) - physical layer.

The layer 2 (L2) of NR is split into the following sublayers: Medium Access Control (MAC), Radio Link Control (RLC), Packet Data Convergence Protocol (PDCP) and Service Data Adaptation Protocol (SDAP), where e.g.:
- The physical layer offers to the MAC sublayer transport channels;
- The MAC sublayer offers to the RLC sublayer logical channels;
- The RLC sublayer offers to the PDCP sublayer RLC channels;
- The PDCP sublayer offers to the SDAP sublayer radio bearers;
- The SDAP sublayer offers to 5GC QoS flows;
- Comp. refers to header compression and Segm. To segmentation;
- Control channels include (BCCH, PCCH).

Layer 3 (L3) includes e.g., Radio Resource Control (RRC), e.g., according to 3GPP TS 38.300 V16.6.0 (2021-06) section 6 incorporated by reference.

A RAN (Radio Access Network) node or network node like e.g. a gNB, base station, gNB CU or gNB DU or parts thereof may be implemented using e.g. an apparatus with at least one processor and/or at least one memory (with computer-readable instructions (computer program)) configured to support and/or provision and/or process CU and/or DU related functionality and/or features, and/or at least one protocol (sub-)layer of a RAN (Radio Access Network), e.g. layer 2 and/or layer 3.

The gNB CU and gNB DU parts may e.g., be co-located or physically separated. The gNB DU may even be split further, e.g., into two parts, e.g., one including processing equipment and one including an antenna. A Central Unit (CU) may also be called BBU/REC/RCC/C-RAN/V-RAN, O-RAN, or part thereof. A Distributed Unit (DU) may also be called RRH/RRU/RE/RU, or part thereof. Hereinafter, in various example embodiments of the present disclosure, the CU-CP (or more generically, the CU) may also be referred to as a (first) network node that supports at least one of central unit control plane functionality or a layer 3 protocol of a radio access network; and similarly, the DU may be referred to as a (second) network node that supports at least one of distributed unit functionality or the layer 2 protocol of the radio access network.

A gNB-DU supports one or multiple cells, and could thus serve as e.g., a serving cell for a user equipment (UE).

A user equipment (UE) may include a wireless or mobile device, an apparatus with a radio interface to interact with a RAN (Radio Access Network), a smartphone, an in-vehicle apparatus, an IoT device, a M2M device, or else. Such UE or apparatus may comprise: at least one processor; and at least one memory including computer program code; wherein the at least one memory and the computer program code are configured to, with the at least one processor, cause the apparatus at least to perform certain operations, like e.g. RRC connection to the RAN. A UE is e.g., configured to generate a message (e.g., including a cell ID) to be transmitted via radio towards a RAN (e.g., to reach and communicate with a serving cell). A UE may generate and transmit and receive RRC messages containing one or more RRC PDUs (Packet Data Units).

The UE may have different states (e.g., according to 3GPP TS 38.331 V16.5.0 (2021-06) sections 42.1 and 4.4, incorporated by reference).

A UE is e.g., either in RRC_CONNECTED state or in RRC_INACTIVE state when an RRC connection has been established.

In RRC_CONNECTED state a UE may:
- store the AS context;
- transfer unicast data to/from the UE;
- monitor control channels associated with the shared data channel to determine if data is scheduled for the data channel;
- provide channel quality and feedback information;
- perform neighboring cell measurements and measurement reporting.

The RRC protocol includes e.g. the following main functions:
- RRC connection control;
- measurement configuration and reporting;
- establishment/modification/release of measurement configuration (e.g. intrafrequency, inter-frequency and inter-RAT measurements);
- setup and release of measurement gaps;
- measurement reporting.

The general functions and interconnections of the described elements and functions, which also depend on the actual network type, are known to those skilled in the art and described in corresponding specifications, so that a detailed description thereof may omitted herein for the sake of conciseness. However, it is to be noted that several additional network elements and signaling links may be employed for a communication to or from an element, function or application, like a communication endpoint, a communication network control element, such as a server, a gateway, a radio network controller, and other elements of the same or other communication networks besides those described in detail herein below.

A communication network architecture as being considered in examples of embodiments may also be able to communicate with other networks, such as a public switched telephone network or the Internet. The communication network may also be able to support the usage of cloud services for virtual network elements or functions thereof, wherein it is to be noted that the virtual network part of the telecommunication network can also be provided by non-cloud resources, e.g. an internal network or the like. It should be appreciated that network elements of an access system, of a core network etc., and/or respective functionalities may be implemented by using any node, host, server, access node or entity etc. being suitable for such a usage. Generally, a network function can be implemented either as a network element on a dedicated hardware, as a software instance running on a dedicated hardware, or as a virtualized function instantiated on an appropriate platform, e.g., a cloud infrastructure.

Furthermore, a network element, such as communication elements, like a UE, a terminal device, control elements or functions, such as access network elements, like a base station / BS, a gNB, a radio network controller, a core network control element or function, such as a gateway element, or other network elements or functions, as described herein, and any other elements, functions or applications may be implemented by software, e.g., by a computer program product for a computer, and/or by hardware. For executing their respective processing, correspondingly used devices, nodes, functions or network elements may include several means, modules, units, components, etc. (not shown) which are required for control, processing and/or communication/signaling functionality. Such means, modules, units and components may include, for example, one or more processors or processor units including one or more processing portions for executing instructions and/or programs and/or for processing data, storage or memory units or means for storing instructions, programs and/or data, for serving as a work area of the processor or processing portion and the like (e.g. ROM, RAM, EEPROM, and the like), input or interface means for inputting data and instructions by software (e.g. floppy disc, CD-ROM, EEPROM, and the like), a user interface for providing monitor and manipulation possibilities to a user (e.g. a screen, a keyboard and the like), other interface or means for establishing links and/or connections under the control of the processor unit or portion (e.g. wired and wireless interface means, radio interface means including e.g. an antenna unit or the like, means for forming a radio communication part etc.) and the like, wherein respective means forming an interface, such as a radio communication part, can be also located on a remote site (e.g. a radio head or a radio station etc.). It is to be noted that in the present specification processing portions should not be only considered to represent physical portions of one or more processors, but may also be considered as a logical division of the referred processing tasks performed by one or more processors. It should be appreciated that according to some examples, a so-called "liquid" or flexible network concept may be employed where the operations and functionalities of a network element, a network function, or of another entity of the network, may be performed in different entities or functions, such as in a node, host or server, in a flexible manner. In other words, a "division of labor" between involved network elements, functions or entities may vary case by case.

As decribed above, in physical environments where the set of objects or people and their trajectories are not pre-defined and controlled, it is expensive and hard to deploy dedicated sensors in every potential area where a relevant motion or presence event may happen. An alternative approach is to leverage sensing capabilities of the wireless network that is anyway deployed to provide communication services over the area where the observations relevant for the DTs need to take place. In 5G advanced and especially in future 6G private networks, using Integrated Sensing and Communication (ISAC) capabilities enables the network to fulfill both requirements, namely, to act as a sensor of relevant mobility and presence events, and to provide reliable, real-time and deterministic communication for the industrial use cases.

A challenge rooted in the technology of ISAC is that its quality (e.g., resolution, clarity, precision, latency and granularity) of detecting presence and mobility events is lower compared to what dedicated (albeit more expensive and hard-to-deploy) motion/presence sensors or video-based monitoring could provide. Therefore, integrating ISAC into an industrial use case as a standalone presence/mobility detection solution may not be feasible. Instead, sensing data gathered by ISAC needs to be correlated with domain knowledge on the industrial scene and use case to extract the necessary information about anticipated motion/presence events. Such correlation requires interworking between the network (having the ISAC technology) and the industrial system (having the domain/scene knowledge). Details of such interworking are not existing in the state of the art, therefore it requires the development of new mechanisms.

References are now made to the figures. In particular, it is to be noted that identical or like reference numbers used in the figures of the present disclosure may, unless indicated otherwise, indicate identical or like elements, such that repeated description thereof may be omitted for reasons of conciseness.

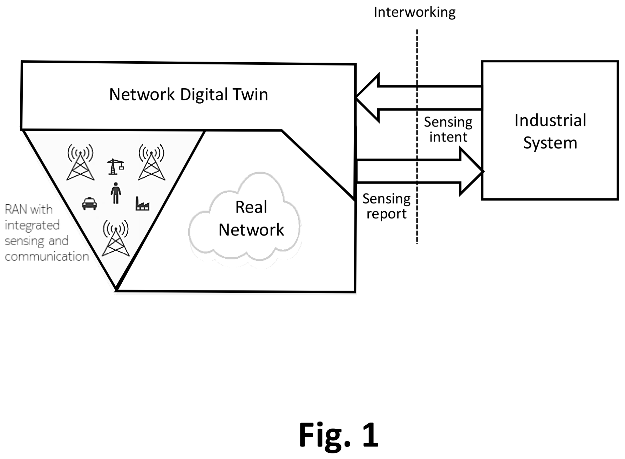

The invention provides a novel interworking mechanism between a network with ISAC capabilities, and an industrial system that depends on presence and mobility detection capabilities to support its industrial process, as illustrated in Figure 1.

The key idea of the invention is that instead of trying to use the network sensing capabilities as a general-purpose sensor that should be able to detect any type of presence/mobility event anytime anywhere, the industrial system may provide geo-spatial and temporal boundaries describing where/when certain types of presence/mobility events are anticipated. The assumption is that (1) the industrial system may know about such events as they are part of its own internal representation of the industrial process; and (2) for a network with sensing capabilities, it may be more feasible to be sensitive and classify sensing output into a set of pre-defined events within a finite space-time boundary than being open to detect any events. The network may report if an anticipated event occurred within the expected space/time boundaries, or if no events were detected through the network's sensing capabilities (although anticipated by the industrial system).

For the network to be sensitive to specific types of mobility/presence events that are meaningful for the industrial system, the general ISAC capabilities (built-into the Radio Access Network, RAN) must be specialized. This may be achieved through a NDT that abstracts the low-level sensing capabilities of the network and exposes high-level industrially relevant events that may be requested as a sensing intent. Using an NDT in between the raw sensing capabilities and the industrial system enables adaptation to different industrial needs without having to interfere with low-level HW and signal processing functions.

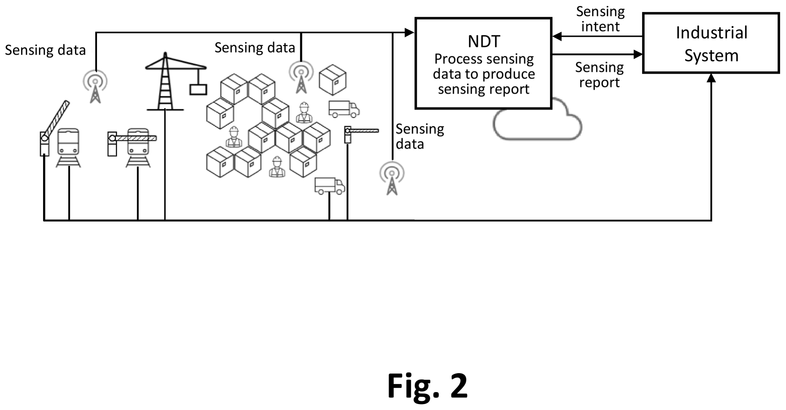

An example deployment of the invention is shown in Fig. 2. The environment is a cargo handling terminal where both physical objects (e.g., containers) and people (e.g., ground staff) are moving according to a schedule (the logistic process) but without knowing exactly and precisely when, where and what/who will turn up, therefore having a sensing capability that is available over the entire area is beneficial for the industrial system that is in charge of micro-managing the logistics (e.g., by dispatching/controlling autonomous vehicles/cranes). Therefore, the industrial system places sensing intents to the network (through the NDT) to request a sensing report in case people or certain types of objects (containers, vehicles) are spotted in anticipated areas during times of expected on/off-loading activities. The role of the NDT is to collect raw sensing data from the RAN and process them to detect and report the occurrence of events described by the sensing intent.

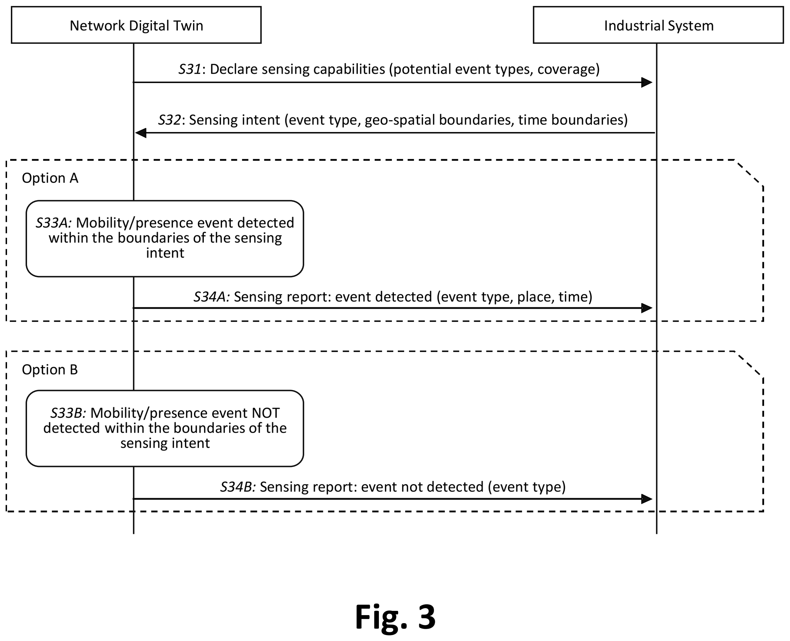

The interworking process are shown in Fig. 3. In the embodiment shown in Fig. 3, the interworking process may comprise steps as follows.

Step 301. The NDT may declare the types of sensing events it supports (based on the real network's RAN ISAC capabilities) and the coverage area where sensing is available.

Step 302. The industrial system may send a sensing intent to the NDT indicating what (event type), where (geo-spatial boundaries) and when (time boundaries) is anticipated in terms of presence/motion.

Step 303. The network and the NDT leverage the sensing capabilities to detect mobility/presence events.

Optionally, in step 303A, one or more events may be detected according to the sensing intent.

Optionally, in step 303B, one or more events may not be detected according to the sensing intent.

Step 304. The network sends a sensing report to the industrial system.

Optionally, in step 304A, one or more sensing reports indicating the detection of an anticipated event are sent to the industrial system, and such sensing report may be refer as a positive report or a positive sensing report.

Optionally, in this step 304B, one or more sensing reports indicating anticipated events that were not detected are sent to the industrial system, and such sensing report may be refer as a negative report or a negative sensing report.

An advantage of the invention is to enable the industrial system to cross-check the progress of its internal process state with motion/presence events that occur in the real physical spare, validating that the anticipated physical events actually took place (or, if not, initiate the necessary countermeasures).

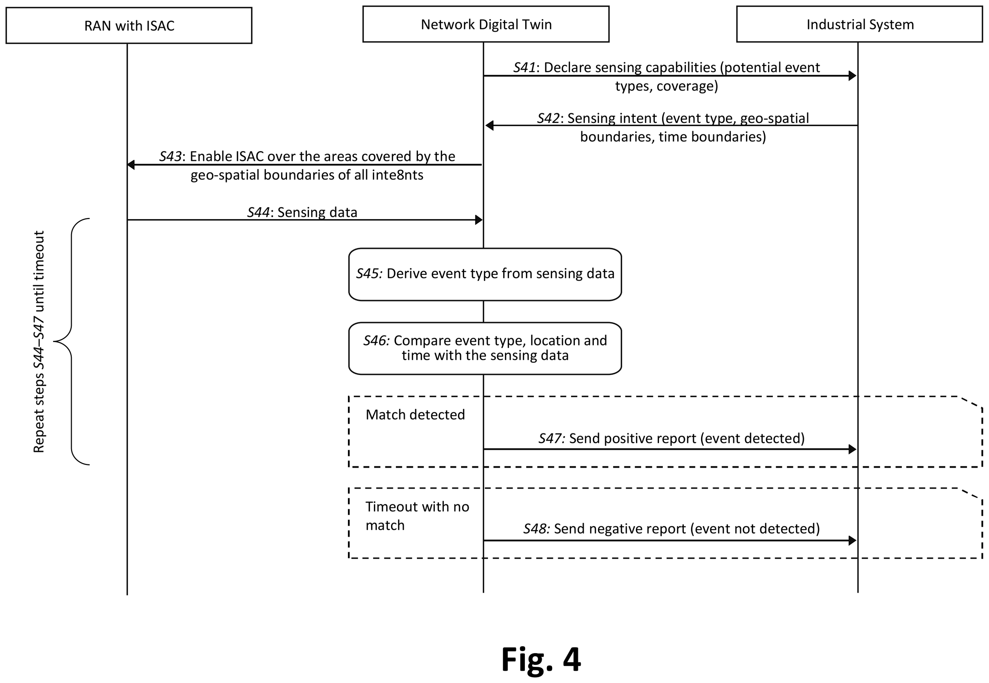

The interworking process between the industrial system, the NDT and the RAN with ISAC capability is further outlined in Fig. 4. In the embodiment shown in Fig. 4, the interworking process may comprise steps as follows.

Step 401. The NDT may declare its sensing capabilities. The sensing capabilities may include the potential event types it can derive by analyzing sensing data collected from the RAN. The event types may include whether it's a presence or motion detection, and what kind of object (or person) may be the subject of detection. The sensing capabilities may also include the coverage area where the sensing operates.

Step 402. The industrial system may set a sensing intent indicating the event type (what to be detected) with hints on anticipated geo-spatial (where it should occur) and time (when it should occur) boundaries.

Step. 403. Based on the sensing intent, the NDT may configure ISAC in the RAN to make sure it operates over the area where the sensing intent anticipates the events to occur.

Step 404. The NDT may collect sensing data from the RAN.

Step 405. The NDT may analyze the RAN sensing data to detect if there is any pattern in the sensing data that is indicative of an event type that it can recognize (i.e., if the sensing data indicates any motion or presence occurrence at all).

Step 406. If step 405 was successful, the event type is derived, and it may be compared with the sensing intent's event type. The location and time of the detection may be also compared with the sensing intent's geo-spatial boundaries and time boundaries, respectively, to determine if the event falls into the category that needs to be reported to the industrial system.

Step 407. If the detected event type, location and time in step 406 matches the sensing intent, the event is reported to the industrial system.

Step 408. If no event was detected until the end of the sensing intent's declared time boundary, a timeout is declared, and a negative even report is sent to the industrial system indicating that an anticipated event was not detected.

It is to be noted that steps 404-407 may be repeated multiple times during the lifetime of a sensing intent.

Optionally, multiple sensing intents may be declared to the NDT simultaneously. In this case, the NDT configures the RAN in step 403 to activate ISAC over the union of all geo-spatial boundaries of the intents. The rest of the procedure applies to each of the sensing intents separately.

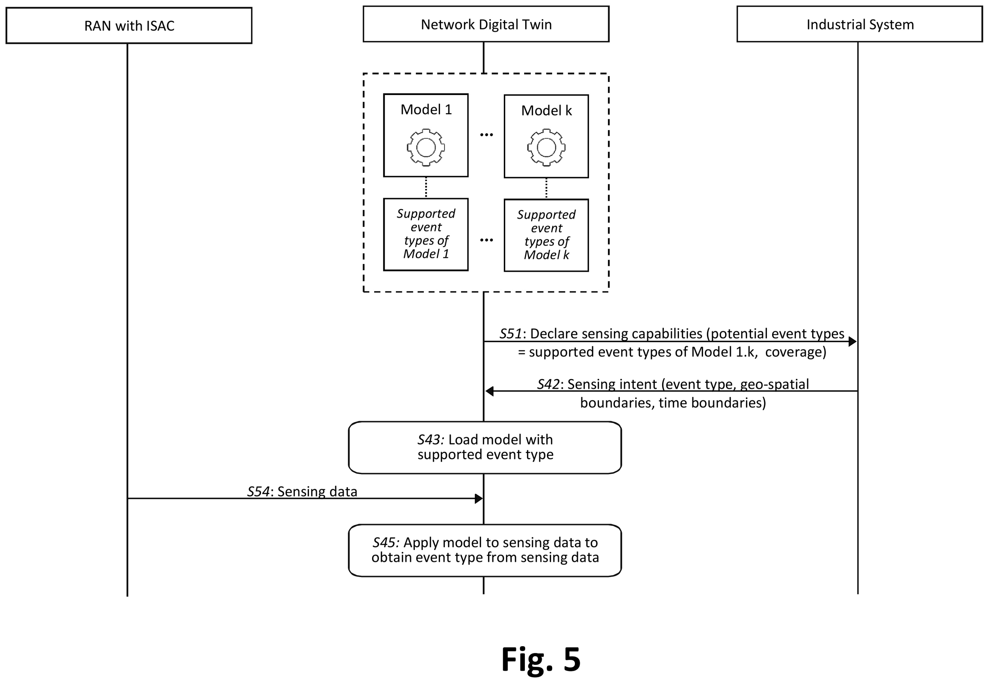

The means to analyze the RAN sensing data to detect mobility/presence events is illustrated in Fig. 5. The NDT has one or more models, each of which is able to classify sensing data to detect one or more mobility/presence event(s).

Step 501. the declaration of the NDT's sensing capabilities may be populated based on the set of models available to the NDT.

Step 502. The same as step 402, the industrial system may set a sensing intent indicating the event type (what to be detected) with hints on anticipated geo-spatial (where it should occur) and time (when it should occur) boundaries.

Step 503. Based on the sensing intent's event type, the NDT may load the right model that can detect the declared event type.

Step 504. The same as step 404, the NDT may collect sensing data from the RAN.

Step 505. The model selected in Step 503 is applied to the sensing data received in Step 504 to produce the detection of an event type (or the indication that no event was detected).

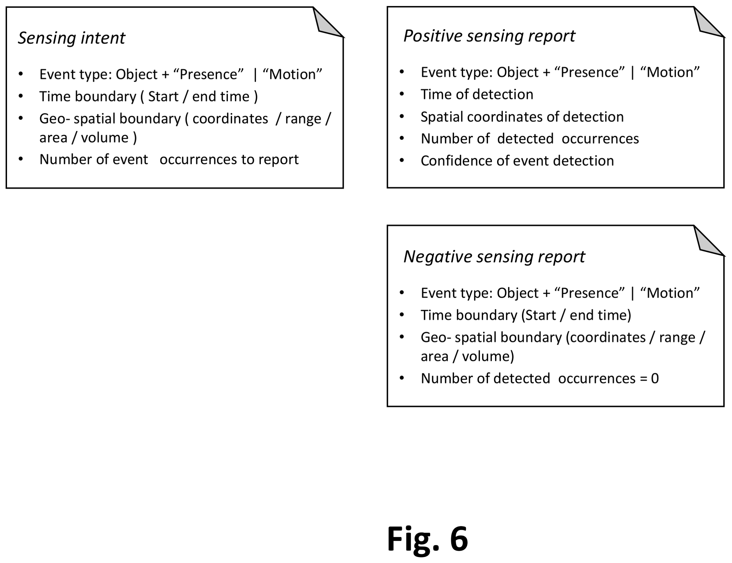

The data types associated with sensing intent and sensing report are illustrated in Figure 6. Sensing intent may contain at least one of the following information elements:
Event type, including the type of object that is subject of detection (e.g., "human", "truck", "container", etc.) and whether the interest is to detect its presence or mobility;
Time boundary, indicating when (with an interval) the event is anticipated;
Geo-spatial boundary, indicating where the event is anticipated (e.g., using coordinates, or giving a range, an area, a 3D volume, etc.);
How many times the event should occur to trigger a report.

Positive sensing report, which indicates that an event conforming to a sensing intent was detected, may contain at least one of the following information elements:
The event type (same as in the sensing intent);
The time when the detection happened;
The coordinates where the detection happened (these may not be exact coordinates but ranges/volumes/etc. similarly to what was declared in the sensing intent, however with much better precision meaning much smaller area/volume that constrains the potential location of the event);
How many times the event was detected, which may be higher than the number of occurrences required by the sensing intent;
A confidence (e.g., expressed as a percentage) indicating the likelihood of the event being a true positive. The confidence may be obtained from the underlying model that produces the detection of the event (e.g., many AI/ML models are able to do classification with attached confidence).

Negative sensing report, indicating that one or more events anticipated according to a sensing intent did not occur at all, or occurred less times than expected, may contain at least one of the following information elements:
Event type, time and geo-spatial boundaries same as in the sensing intent
Number of detected occurrences, which may be zero, or less than the expected number of occurrences.

### Additional use cases that may benefit from the invention

For certain industrial DT use cases, such as continuous quality control of a manufacturing process, precise alignment is needed between the virtual representation of the progress and state of the process in the DT's model and the ground truth that is happening on the factory floor. The manufacturing equipment (such as robotic tools, AGVs, etc.) itself could be considered the ultimate source of information, as those are the physical entities acting out the industrial process, therefore they are, by definition, representing the actual manufacturing process reality at any point in time. Yet, that equipment may not be able to stream the necessary information to the DTs for various reasons. For example, the equipment does not provide any APIs through which an industrial DT could obtain precise and real time information about the internal state of the device. Another reason could be the autonomy of the manufacturing devices. I4.0 increasingly takes advantage of robotized actors, such as AGVs for part transportation during manufacturing, or robotized tools for executing a manufacturing step (e.g., drilling, coating, etc.). Those devices are specialized HW+SW systems on their own, being able to respond to high level manufacturing commands and execute them autonomously. For example, commanding a manufacturing robot to drill a hole in a piece of metal may not immediately trigger a deterministic process with a pre-defined duration. Instead, when the machine receives the command, it may (or may not) first perform a tool calibration (or even a tool switch to automatically select a different drilling head); the calibration may take a varying amount of time, depending on the robot's internal sensors and built-in logic; then the adjustment of the tool head to the material piece may take a non-deterministic time, depending on how many iterations the robot is performing to move the material in position; etc. Even if the industrial process perfectly knows when it issued the command to the machine to perform a known manufacturing step, its actual start time and the progress of execution may be out of the greater system's control and could only be learned by externally observing the manufacturing robot.

In summary, the invention provides a novel interworking mechanism between a network with ISAC capabilities, and an industrial system that depends on presence and mobility detection capabilities to support its industrial process. This way, the industrial system is enabled to cross-check the progress of its internal process state with motion/presence events that occur in the real physical spare, validating that the anticipated physical events actually took place (or, if not, initiate the necessary countermeasures).

It is noted that, although in the above-illustrated example embodiments (with reference to the figures), the messages communicated/exchanged between the network components/elements may appear to have specific/explicit names, depending on various implementations (e.g., the underlining technologies), these messages may have different names and/or be communicated/exchanged in different forms/formats, as can be understood and appreciated by the skilled person.

According to some example embodiments, there are also provided corresponding methods suitable to be carried out by the apparatuses (network elements/components) as described above, such as the UE, the CU, the DU, etc.

It should nevertheless be noted that the apparatus (device) features described above correspond to respective method features that may however not be explicitly described, for reasons of conciseness. The disclosure of the present document is considered to extend also to such method features. In particular, the present disclosure is understood to relate to methods of operating the devices described above, and/or to providing and/or arranging respective elements of these devices.

Further, according to some further example embodiments, there is also provided a respective apparatus (e.g., implementing the UE, the CU, the DU, etc., as described above) that comprises at least one processing circuitry, and at least one memory for storing instructions to be executed by the processing circuitry, wherein the at least one memory and the instructions are configured to, with the at least one processing circuitry, cause the respective apparatus to at least perform the respective steps as described above.

Yet in some other example embodiments, there is provided a respective apparatus (e.g., implementing the UE, the CU, the DU, etc., as described above) that comprises respective means configured to at least perform the respective steps as described above.

It is to be noted that examples of embodiments of the disclosure are applicable to various different network configurations. In other words, the examples shown in the above described figures, which are used as a basis for the above discussed examples, are only illustrative and do not limit the present disclosure in any way. That is, additional further existing and proposed new functionalities available in a corresponding operating environment may be used in connection with examples of embodiments of the disclosure based on the principles defined.

It should also to be noted that the disclosed example embodiments can be implemented in many ways using hardware and/or software configurations. For example, the disclosed embodiments may be implemented using dedicated hardware and/or hardware in association with software executable thereon. The components and/or elements in the figures are examples only and do not limit the scope of use or functionality of any hardware, software in combination with hardware, firmware, embedded logic component, or a combination of two or more such components implementing particular embodiments of the present disclosure.

It should further be noted that the description and drawings merely illustrate the principles of the present disclosure. Those skilled in the art will be able to implement various arrangements that, although not explicitly described or shown herein, embody the principles of the present disclosure and are included within its spirit and scope. Furthermore, all examples and embodiment outlined in the present disclosure are principally intended expressly to be only for explanatory purposes to help the reader in understanding the principles of the proposed method. Furthermore, all statements herein providing principles, aspects, and embodiments of the present disclosure, as well as specific examples thereof, are intended to encompass equivalents thereof.

### List of abbreviations:

- AGV: Automated Guided Vehicle
- API: Application Programming Interface
- DT: Digital Twin
- I4.0: Industry 4.0
- ISAC: Integrated Sensing and Communication
- NDT: Network Digital Twin
- RAN: Radio Access Network

## Claims

1. A first network node, of a network having a plurality of network nodes, wherein the first network node includes one or more sensing capabilities of an event type and/or a coverage area and wherein the first network node is a network digital twin, NDT;
wherein the first network node comprises:
means for receiving, from a second network node, a sensing intent indicating to the first network node to detect an event within the coverage area and/or within a time window,
wherein the event corresponds to an event type for which the first network node includes one or more sensing capabilities;
means for detecting occurrence of the event indicated in the sensing intent, based on the sensing capabilities of the first network node;
means for sending, to the second network node, a sensing report based on the detection.

2. The first network node according to claim 1, wherein, the first network node further comprises:
means for, before receiving from the second network node the sensing intent, providing, to the second network node, the sensing capabilities of an event type and/or a coverage area that the first network node is able to detect.

3. The first network node according to claim 2, wherein the means for providing, to the second network node, the sensing capabilities of an event type and/or a coverage area that the first network node is able to detect, comprises:
means for providing, to the second network node, at least one sensing capability of an event type and/or a coverage area that the first network node is able to detect based on a set of models of sensing capabilities available to the first network node, wherein the set of models of sensing capabilities includes at least one model of sensing capabilities, and each of the at least one model of sensing capabilities comprises one or more supported event types which can be detected by the first network node based on the one or more sensing capabilities.

4. The first network node according to any one of claims 1 to 3, wherein the means for detecting of the occurrence of the event indicated in the sensing intent, based on the sensing capabilities of the first network node, comprises one or more of the following:
means for determining, based on the sensing intent, at least one model of sensing capabilities from the set of models of sensing capabilities available to the first network node;
means for loading, the determined at least one model of sensing capabilities from the set of models of sensing capabilities available to the first network node;
means for receiving, sensing data, from a third network node;
means for obtaining, at least one first event from the sensing data based on the determined at least one model;
means for comparing, the obtained at least one first event from the sensing data with the event indicated in the sensing intent;
means for determining, if the obtained at least one first event from the sensing data matches with the event indicated in the sensing intent.

5. The first network node according to any one of claims 1 to 4, wherein the means for sending, to the second network node, the sensing report based on the sensing intent, comprises:
means for sending, to the second network node, a positive report if the event indicated in the sensing intent is detected; or
means for sending, to the second network node, a negative report if the event indicated in the sensing intent is not detected.

6. The first network node according to claim 5, wherein the means for sending, to the second network node, the positive report if the event indicated in the sensing intent is detected, comprises:
means for sending, to the second network node, the positive report if the obtained at least one first event from the sensing data matches with the event indicated in the sensing intent; and
wherein the means for sending, to the second network node, a negative report if the event indicated in the sensing intent is not detected, comprises:
means for sending, to the second network node, the negative report if the event indicated in the sensing intent is not detected until the end of the time boundary.

7. The first network node according to any one of claims 1 to 6, wherein the at least one event type comprises at least one of the followings: presence of an object, a motion of an object, and a type of the object.

8. The first network node according to any one of claims 1 to 7, wherein the sensing intent further indicates a number of times that the event indicated in the sensing intent is to be detected.

9. The first network node according to claim 5 or 6, wherein,
the positive report indicates that an event conforming to the event indicated in the sensing intent is detected; and/or
the negative report indicates that one or more events indicated in the sensing intent does not occur, or occurs less times than a number of times indicated in the sensing intent.

10. The first network node according to any one of claims 5, 6 or 9, wherein the positive report comprises at least one of the following information elements: the at least one event type, a first time boundary indicating when the occurrences of the event was detected, a location of the detection, a number of detected occurrences of the event, and a confidence indicating the likelihood of the event being a true positive, wherein the first time boundary is within the time boundary, and the location of the detection is within the at least one coverage area.

11. The first network node according to any one of claims 5, 6 or 9, wherein the negative report comprises at least one of the following information elements: the at least one event type, a first time boundary indicating when the occurrences of the event was detected, a location of the detection, and a number of detected occurrences of the event, wherein the first time boundary is within the time boundary, and the location of the detection is within the at least one coverage area.

12. A second network node, wherein the second network node comprises:
means for sending, to a first network node, a sensing intent, which is used to indicate the first network node to detect an event within a coverage area and within a time window, wherein the event corresponds to an event type for which the first network node includes one or more sensing capabilities; and
means for receiving, from the first network node, a sensing report based on a detection performed by the first network node according to the sensing intent.

13. A communication method, wherein the method comprises:
receiving, from a second network node, a sensing intent, which is used to indicate to the first network node to detect an event within the coverage area and/or within a time window,
wherein the event corresponds to the event type of which the first network node includes one or more sensing capabilities;
performing, detection of an occurrence of an event indicated in the sensing intent, based on the sensing capabilities of the first network node; and
sending, to the second network node, a sensing report based on the detection;
wherein, the first network node is a network digital twin, NDT.

14. A communication method, wherein the method comprises:
sending, to the first network node, a sensing intent, which is used to indicate the first network node to detect an event within at least one of the at least one coverage area and within a time window, wherein the event corresponds to an event type of which the first network node includes one or more sensing capabilities; and
receiving, from the first network node, a sensing report based on a detection performed by the first network node according to the sensing intent.

15. A computer readable medium storing instructions thereon, the instructions, when executed by at least one processing unit of a machine, causing the machine to perform the method according to any one of the claims 13 to 14.
